# EUROPEAN PATENT APPLICATION

(11) **EP 2 808 962 A1**
(43) Date of publication of application: **03.12.2014**
(21) Application number: 13169335.0
(22) Date of filing: 27.05.2013
(51) Int. Cl.: H02G 3/22

(54) **A grommet**

(71) Applicant: Axis AB, 223 69 Lund (SE)
(72) Inventor: Lundquist, Anders, 247 72 Genarp (SE); Lundberg, Ulf, 226 51 Lund (SE)
(74) Representative: Åkesson, Sten Jan-Åke

(57) **Abstract**

The invention relates to a grommet (1) for providing a sealed passage for an elongated object (81) through a surface opening in a surface (60), said grommet (1) comprising: a frame (10) for attachment of said grommet (1) in said surface opening; an elastic member (11) enclosed by said frame (10); and a pulling element (12) connected to said elastic member (11) via a weakening (13); said pulling element (12) being releasably connected to said elastic member (11) along said weakening (13) for provision of a defined opening (70) in said elastic member (11) when said pulling element (12) is in a released state, said defined opening (70) providing said sealed passage; wherein said pulling element (12) is releasable from said elastic member (11) by pulling. The invention also relates to a method for providing a cable arrangement in a housing

## Description

### Technical field

The present invention relates to the field of grommets, and in particular to grommets for elongated objects such as cables. The present invention also relates to a method for providing a cable arrangement in a housing by means of such a grommet.

### Background of the invention

There exist a great variety of wired devices and appliances. Many of these devices may be arranged in a housing for protection or support. The housing may comprise openings for providing an entry passage for cables or other elongated objects. For many applications, it is desirable to keep the entry sealed in order to prevent water, moist or elements such as insects, debris or dust from entering the inside of the housing. It is of course preferred that the opening is sealed both before and while the cable or the like is provided through the entry. Thus, a housing may be arranged with different configurations of entries without the need for utilizing all entries or plugging each unused entry in order to keep them sealed.

For this purpose, a sealing member may be provided in an opening of the housing for providing a passage. Before any cable or the like is provided through the sealing member, the sealing member seals the opening. A passage through the opening may be provided by tearing the sealing member by for example pushing a sharp object or the cable or the like itself through the sealing member. However, such an arrangement do not provide an adequate sealing since the sealing member easily tears too much and thus loses its sealing capacity.

A sealing while the cable or the like is arranged in the opening, through e.g. a grommet, may instead be achieved by shrinkable tubing or sealants such as caulking, which are applied when the cable or the like is inserted into the entry passage. These methods are however time-consuming and in some cases difficult and/or messy to perform.

From the above discussion, there is evidently a need for an improved arrangement for providing a passage for cables and other elongated objects.

### Summary of the invention

It is an object of the present invention to overcome the above mentioned drawbacks and problems, and to provide an improved grommet. In particular, it is an object to provide a grommet which simplifies the providing of a sealed passage for an elongated object such as a cable.

According to a first aspect of the invention, this and other objects are achieved by a grommet for providing a sealed passage for an elongated object through a surface opening in a surface, the grommet comprising: a frame for attachment of the grommet in the surface opening; an elastic member enclosed by the frame; and a pulling element connected to the elastic member via a weakening. The pulling element is releasably connected to the elastic member along the weakening for provision of a defined opening in the elastic member when the pulling element is in a released state. The defined opening provides the sealed passage. The pulling element is releasable from the elastic member by pulling.

The present invention provides a grommet which may be attached in a surface opening of e.g. a housing. The grommet has two states: a first state in which no passage through the grommet is provided, and a second state in which a sealed passage through the grommet is provided. The grommet is converted from its first state to its second state by releasing the pulling element from the elastic member of the grommet. The releasing of the pulling element forms the defined opening thanks to a controlled releasing achieved by the form of the weakening. The elastic member may, due to the opening being defined, be stretched to a great extent when compared to if the releasing would be made in an non-controlled manner. An elongated object, such as a connector, being much larger than the defined opening, may thus be pushed through the opening, by stretching the elastic member, and without tearing the elastic member. The installation of e.g. wires for a wired device in a housing may thus be simplified. Further, the sealing of an elongated object, such as a cable, when provided through the grommet is simple by that there is no need for any further components such as shrinkable tubing or sealants.

The purpose of the grommet is thus to provide a sealed passage for the elongated object through the surface opening. The elongated object may be a cable, although the invention is not to be limited thereto. In other embodiments, the elongated object may be for example a pipe, a hose, a shaft, or objects such as a lens assemby of camera device or the like.

The grommet may be arranged to form a sealing of the surface opening in a non-released state of the pulling element. Thus, the grommet is sealed also in the above-mentioned first state, in which no passage is provided through the grommet.

The weakening may have a circular extension. Thus, the risk that the elastic member is torn when the elongated object passes through the defined opening is lowered. Further, a more controlled through-passing of the elongated object is achieved.

The weakening may be formed by a reduction in thickness. The weakening may be formed as a separate element, or be integrally formed with one or both of the elastic member and the pulling element.

The weakening may be formed by a distinct notch arrangement. A notch arrangement may be arranged circumferentially around the pulling element. Preferably, the weakening is formed with a uniform thickness. By a distinct configuration is in this context consequently meant a configuration having sharp edges and/or corners.

The elastic member may be funnel-shaped. This feature forms a good sealing between the elastic member and an elongated object extending through the sealed passage of the grommet. Further, the elastic member may by its funnel-shape protrude outwardly or inwardly. Thus, the elongated object may be moved in both the outward direction and the inward direction of the grommet without affecting the sealing function.

The elastic member may comprise a highly elastic material, such as silicone rubber, having an elasticity of at least 100 %. Elasticity is in this context defined as the relative deformation a material can withstand before it breaks or the deformation becomes plastic. By this features, a connector, or similar, which is large in relation to the defined opening of the elastic member may be passed through the defined opening without tearing the elastic member.

The frame of the grommet may comprise an elastomeric material. Thus, the frame may easily be arranged in and be adapted to the surface opening. An elastomeric material is a highly elastic material which can be stretched at least two times its normal length without breaking or result in plastic deformation. When relaxing an elastomeric material in a stretched state, the material returns to substantially its length and form before stretching, i.e. its normal state.

The frame may comprise a circumferentially extending groove arrangement for the attachment in the surface opening. The groove may be arranged to receive an edge portion of the surface defining the surface opening. The groove arrangement may provide a good sealing between the frame of the grommet and the surface opening. Further the groove arrangement may provide a good fitting of the grommet in the surface opening, thus alleviating the risk that the grommet is detached from the surface opening when the pulling element of the grommet is pulled.

The defined opening may be centrally arranged in the elastic member. The centrally arranged defined opening may contribute to an even strain distribution in the elastic member both when the pulling element is pulled and when a connector, or the like, is pushed through the defined opening. Thus, the stretching capacity of the elastic member may be optimized.

The pulling element and the elastic member may be integrally formed. Alternatively, the frame, the pulling element and the elastic member may be integrally formed. Thus, a good sealing may be provided since less parts need to be attached to each other, therefore reducing the risk of leakage in the rim between two parts, which may negatively affect the sealing capacity. Further, the manufacturing process may be facilitated by that the grommet may be made in fewer manufacturing steps.

According to a second aspect of the invention, the above mentioned and other objects are achieved by a wired device comprising: a housing comprising a surface provided with a surface opening; a grommet according to any of the embodiments mentioned in connection to the first aspect above. The grommet is attached in the surface opening and the pulling element is released from the elastic member along the weakening by pulling for the provision of the defined opening; and a cable enters the housing though the defined opening of the elastic member of the grommet.

According to a third aspect of the invention, the above mentioned and other objects are achieved by a method for providing a cable arrangement in a housing, the cable arrangement comprising a cable and a connector, such as a power plug or a network plug, connected to the cable, the method comprising: providing a housing provided with a surface opening in a surface; attaching a grommet, according to any of the embodiments mentioned in connection to the first aspect above, in the surface opening; pulling the pulling element, thereby releasing the pulling element from the elastic member of the grommet, such that the defined opening in the elastic member is formed; inserting an end of the cable arrangement, the end comprising the connector, through the defined opening; wherein the elasticity of the elastic member permits passing, by elastic deformation of the elastic member, of the connector through the defined opening.

As mentioned above, the installation of e.g. wires for a wired device in a housing may be simplified by the present invention. Further, the sealing of the cable, or other elongated object, when provided through the grommet is simple by that there is no need for any further components such as shrinkable tubing or sealants.

The method may further comprise selecting a grommet for which the perimeter P1 of the defined opening is at most half of the perimeter P2 of a cross-section of the cable. This feature provides a good sealing between the grommet and the cable.

### Brief description of drawings

The above disclosed and other aspects of the present invention will now be described in more detail, with reference to the appended drawings showing embodiments of the invention.
Figure 1 is a perspective view of a grommet according to an embodiment of the invention.
Figure 2 is a view from the side of the grommet.
Figure 3 is a view from the front of the grommet.
Figure 4 is a view of the section taken along the line A-A in figure 3.
Figure 5 is an enlargement of the indicated area in figure 4.
Figures 6a-6c illustrate an element being pulled off from the grommet.
Figure 7 is a perspective view of the grommet when the element is pulled off.
Figures 8 and 9 illustrate a cable arrangement provided through the grommet.
Figure 10 illustrates a method for providing a cable arrangement in a housing by means of the grommet.

### Detailed description

The present invention will now be described more fully with reference to the accompanying drawings, in which currently preferred embodiments of the invention are shown. The invention may however be embodied in many different forms and should not be construed as limited to the embodiments set forth herein.

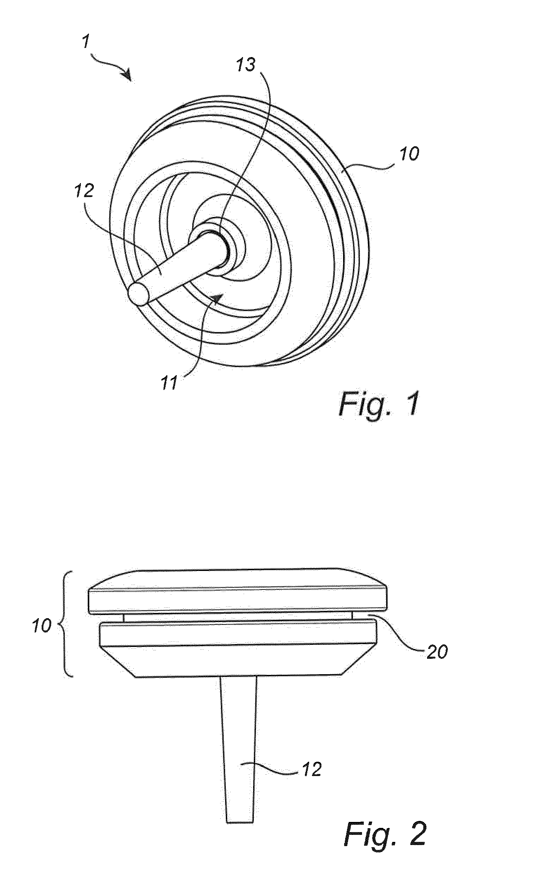

A grommet 1 is illustrated in figure 1. The grommet 1 comprises a frame 10, an elastic member 11 and a pulling element 12. The pulling element 12 is connected to the elastic member 11 via a weakening 13. The weakening 13 forms part of the elastic member 11. The form of the weakening 13 will be disclosed in detail later.

The grommet 1 is arranged to be provided in a surface opening of a surface. The surface could for example be a wall section of a housing. The purpose of the grommet 1 is to provide a sealed passage for an elongated object through the surface opening. In this embodiment, the elongated object is intended to be a cable. The invention will therefore in the following be discussed as applied to an elongated object in the form of a cable, although the invention is not to be limited thereto. In other embodiments, the elongated object may be for example a pipe, a hose, a shaft, or objects such as a lens assemby of camera device or the like.

The grommet 1 is illustrated from the side in figure 2. The frame 10 enables attachment of the grommet 1 in the surface opening. The frame 10 is provided with a groove 20 which extends circumferentially in the frame 10. The groove 20 is arranged to receive an edge portion of the surface defining the surface opening. The frame 10 comprises an elastic material, preferably an elastomeric material, such that the frame 10 is elastic. Thus, the grommet 1 may be arranged in an already formed surface opening by elastic deformation the frame 10 by pressing the grommet 1 into the surface opening.

In other embodiments, the grommet 1 may be attached by means of an adhesive, screws, nails, tape, or the like.

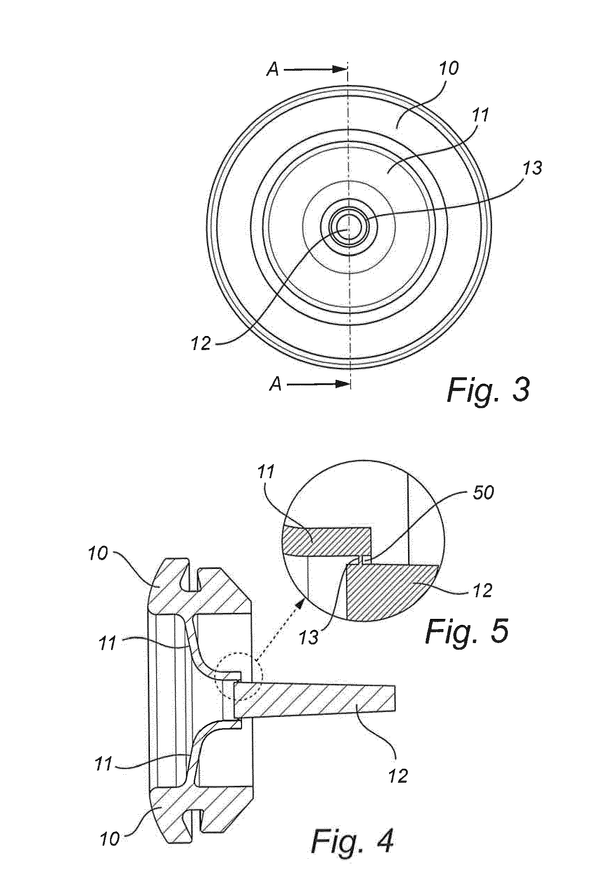

The grommet 1 is illustrated from the front in figure 3. The front of the grommet 1 is the side on which the pulling element 12 is located.

Figure 4 is a view of the section taken along the line A-A in figure 3. In the shown embodiment, the grommet 1 is formed in one piece. Thus, the frame 10 is integrally formed with the elastic member 11 and the pulling element 12 is integrally formed with the elastic member 11. The grommet 1 may thus be manufactured for instance by injection moulding.

The pulling element 12 is connected to the elastic member 11 via the weakening 13. The configuration of the weakening 13 is illustrated in detail in figure 5, which is an enlargement of the indicated area in figure 4. The weakening 13 is formed in one piece with the elastic member 11 and the pulling element 12, and forms a transition section connecting the elastic member 11 with the pulling element 12. In other embodiments, the weakening 13 may form a separate element which is provided between the elastic member 11 and the pulling element 12. Alternatively, the weakening 13 may be integrally formed with only one of the elastic member 11 and the pulling element 12.

The weakening 13 has a circular extension, i.e. is annular, and encloses the pulling element 12.

The weakening 13 is preferably of an elastic material 11, and in this case of the same elastic material as the rest of the grommet 1.

The weakening 13 is formed by a reduction in thickness. In this embodiment, the weakening 13 is achieved by a notch arrangement. A notch arrangement 50 is arranged circumferentially around the pulling element 12, as viewed from the front of the grommet 1. Preferably, the weakening 13 is formed with a uniform thickness.

As seen in figure 5, the elastic member 11 extends around and along a base portion of the pulling element 12, wherein the weakening 13 of the elastic member 11 bridges to the pulling element 12.

The weakening 13 has preferably a distinct configuration, and in the shown embodiment this is achieved by the distinct, step-wise design of the notch arrangement 50. By a distinct configuration is in this context consequently meant a configuration having sharp edges and/or corners.

An ideal distinct configuration of the notch arrangement 50 is an immediate transition between the elastic element 11 and the pulling element 12 on one hand and the weakening 13 having a uniform thickness on the other. It is appreciated that the term distinct should be interpreted in relation to the size and extension of the weakening in total.

The purpose of the weakening 13, is to form a weak portion which is significantly weaker than the rest of the elastic material. When pulling the pulling element 12 connected to the elastic member 11, the pulling element 12 will be released from the elastic member 11 along the weak portion, i.e. the weakening 13. Thus, the portion of the grommet 1 being released by pulling of said pulling element 12 is predetermined for all pulling scenarios, and not determined by parameters of the actual pulling, such as pulling direction or distribution and amount of pulling force.

With a distinct notch arrangement, the weakening 13 forming the weak portion, becomes well defined. Thus, the releasing of the weak portion when the pulling element 12 is pulled is guided by the weak portion without affecting the rest of the elastic member 11. Thus, the risk of tears in the elastic member 11 in the portion nearby the weakening 13 is eliminated or at least substantially reduced, as is the risk of forming initiations causing tearing that extend to the rest of the elastic member 11 when the elastic member 11 is stretched. Any tear in the elastic member 11 may have a negative effect on the sealing function of the elastic member 11.

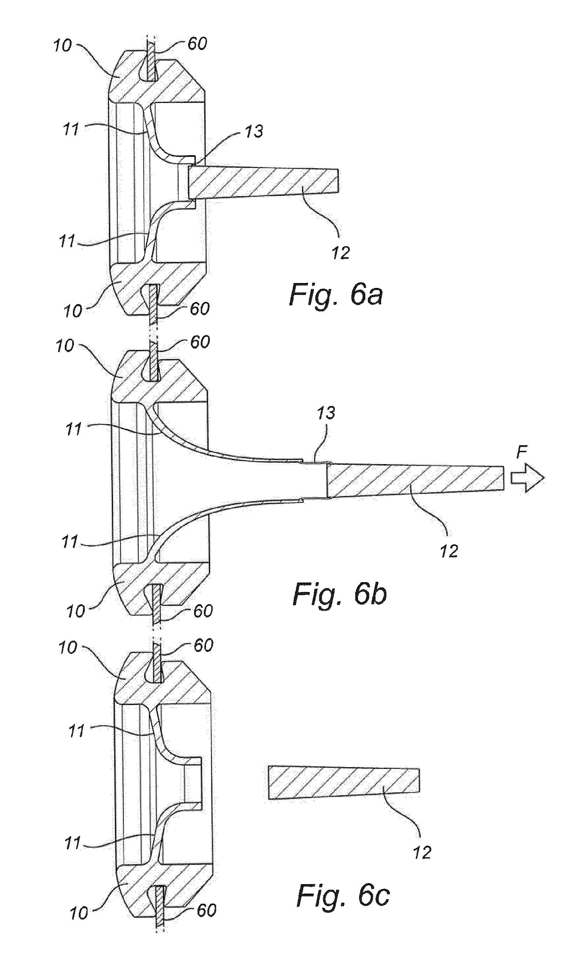

The releasing of the pulling element 12 from the grommet 1 will now be disclosed with reference to figures 6a-6c, which are views of the section of the grommet 1 taken along the line A-A of figure 3.

In figure 6a, the pulling element 12 is connected to the elastic member 11 via the weakening 13. The elastic member 11 is in its normal state, i.e. no significant strain is applied to the elastic member 11. The grommet 1 is attached in a surface opening in a surface 60 by means of the frame 10. The grommet 1 seales the surface opening.

In figure 6b, a pulling force F is applied to the pulling element 12. The pulling force F may be realized by a user holding the pulling element 12 with his fingers and pulling in an outward direction, i.e. away from the grommet 1. By pulling the pulling element 12, the elastic member 11 is also affected by the pulling force. The frame 10 is however retained in a surface opening by its attachment. The elastic member 11 is therefore stretched in the outward direction. The weakening 13, which is also made from an elastic material, is also stretch along the same direction. During the pulling, the pulling element 12 will eventually release from the elastic member 11 at the weakest portion being the weakening 13.

In the shown embodiment, the elastic member 11 is circularly formed and the pulling element 12 is connected to the elastic member 11, via the annularly shaped weakening 13, in a central portion of the elastic member 11. These features will contribute to an even and predictable distribution of the pulling forces in the elastic member 11. Thus, the control of the releasing is enhanced.

How much the pulling element 12 may be pulled before the pulling element 12 is released from the elastic member 11 depends on the elasticity of the elastic member 11 and the form of the weakening 13 along which the pulling element 12 is intended to be released. The skilled person is competent in how to choose these parameters to adjust how much force is required for releasing the pulling element 12.

In figure 6c, the pulling element 12 has been released from the elastic member 13. The elastic member 11 has reverted to its normal state, without any plastic deformation. The material of the elastic member 11 is chosen such that plastic deformation is avoided in view of the forces it is intended to be exposed to.

The material of the weakening 13 is now typically spread out since the weakening has been torn. Remaining portion of the weakening 13 may be left in connection to the elastic member 11 or in connection to the pulling element 12. Remaining portions may also have been torn off from both the pulling element 12 and elastic member 11.

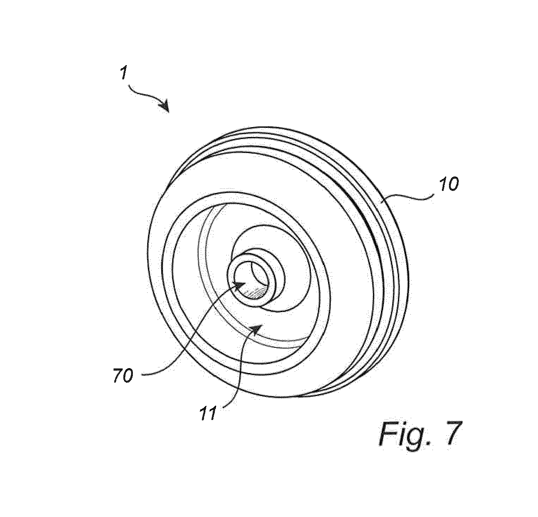

The grommet of figure 6c, with the pulling element 12 released from the elastic member 11, is illustrated in figure 7.

When releasing the pulling element 12 from the elastic member 11, a defined opening 70 is provided. The defined opening 70 is a through hole in the elastic member 11.

The defined opening 70 is an outcome of the weakening 13 provided for a controlled release of the pulling element 12. In this embodiment the weakening 13 is formed as a distinct notch arrangement, thus enhancing the definition of the defined opening.

In this state, i.e. when the pulling element 12 has been released from the elastic member 11, the grommet 1 does not seal the surface opening in which it is attached. This state is an intermediate state between the sealing ground state in which the pulling element 12 is connected, and a sealing passage state in which a cable (or other elongated object) is provided through the defined opening 70 of the grommet 1.

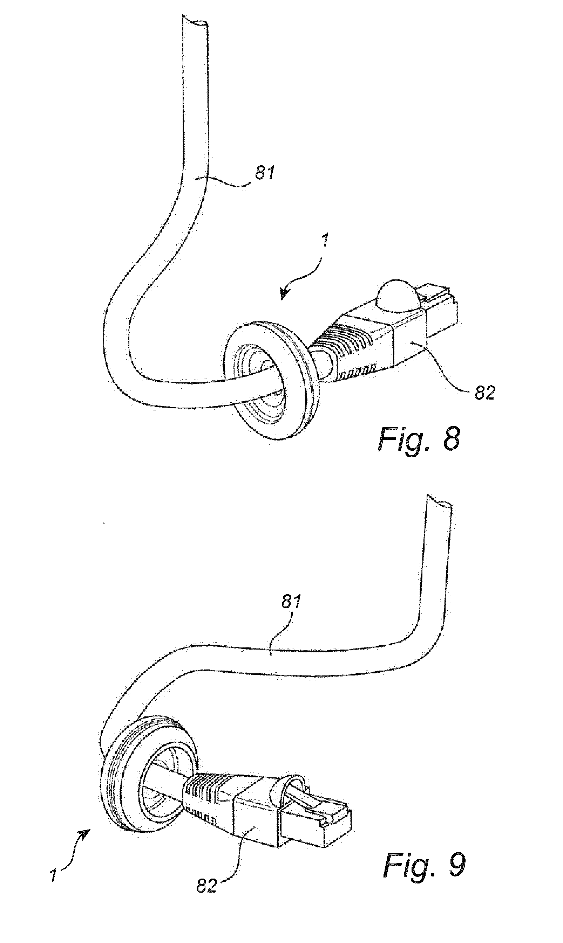

Figures 8 and 9 illustrate a cable arrangement comprising a cable 81 and a connector 82. The cable arrangement has been passed through the defined opening of the grommet 1. The grommet 1 is assumed to be arranged in a not shown surface opening of a surface. Alternatively, the cable arrangement may first be passed through the defined opening and the grommet 1 subsequently be arranged in the surface opening.

By a suitable choice of the elastic material forming the grommet 1, and especially the elastic member 11 thereof, it will be possible to insert the connector 82 through the defined opening without causing any tearing of the grommet 1. The elastic material may preferably be an elastomer.

An elastomer is a highly elastic material which can be stretched at least two times its normal length without breaking or result in plastic deformation. A material which can be stretched at least twice its normal length, without breaking or resulting in plastic deformation, is said to have an elasticity of 100 %. Elasticity is thus defined as the relative deformation a material can withstand before it breaks or the deformation becomes plastic. Preferably, the elastic member 11 is made of an material having an elasticity of at least 100 %, more preferably at least 200 %, and even more preferably at least 400 %.

A non-limiting example of a suitable material for the elastic member 11 is silicone rubber.

Since the defined opening in the elastic member 11 is in fact defined, the elastic member 11 may be stretched many times its normal length without tearing. Tearing during stretch is typically a result of a small initiation or notch in the material and when stretching the material, the initiation propagates through the material and forms a much more extensive tear. With such a tear in the elastic member 11, it loses it sealing capacity and thus the elastic member 11 cannot provide a sealed passage for the cable 81. Hence, it is important to decrease the risk of such damage in the elastic member 11. By the form of the weakening 13 providing control of the release process and providing a defined opening free from initiations, the risk of tears in the elastic member 11 is substantially reduced. Thus, the elastic member 11 is able to safely stretch to such a great extent that the connector 82, which is relatively large in relation to the defined opening, may be passed through the defined opening of the grommet 1. The centrally arranged defined opening also contributes to an even strain distribution in the elastic member 11, and thus optimizes the stretching capacity of the elastic member 11.

Since the connector 82 may be passed through the grommet 1, the cable arrangement does not need to be assembled, by attaching the connector 82 to the cable 81, after passing the cable 81 through the grommet 1. The cable arrangement may instead be pre-assembled. Thus, the installation of e.g. wiring for a wired device in a housing is simplified and may be performed in a more time-efficient manner.

As can be seen in figure 6c, the elastic member 11 has a funnel-shaped form. By this form, the elastic member 11 is arranged along a portion of the cable in its extension direction. This feature forms a good sealing between the elastic member 11 and the cable 81. Further, the elastic member 11 may by its funnel-shape protrude outwardly or inwardly. Thus, the cable 81 may be moved in both the outward direction and the inward direction of the grommet 1 without affecting the sealing function.

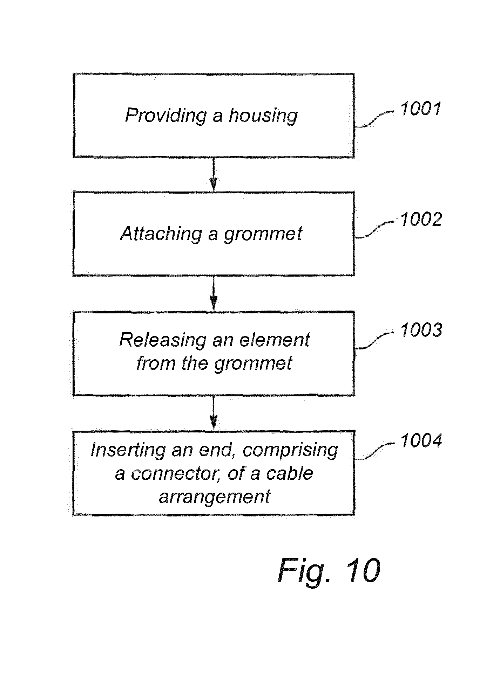

A method for providing the cable arrangement in a housing is illustrated in figure 10.

As a first step, a housing is provided 1001. The housing comprises a surface provided with a surface opening.

As a second step, the grommet 1 is attached 1002 in the surface opening. The grommet 1 is a grommet according to any of the above disclosed embodiments. Thus the grommet 1 comprises an elastic member 11 and a pulling element 12 which is attached to the elastic member 11 via a weakening 13.

As a third step, the pulling element 12 is released 1003 from the grommet 1, thereby releasing the pulling element 12 from the elastic member 11. Thus, the defined opening in the elastic member 11 is formed.

As a fourth step, an end of the cable arrangement, which end comprises the connector 82, is inserted 1004 through the defined opening. By that the elastic member 11 is made of a material having a high elasticity and by that the defined opening is in fact defined, the relatively large connector 82 may be passed through the defined opening without tearing the elastic member 11. When the connector 82 has been passed through the defined opening, the cable 81, which is connected to the connector 82, is arranged in the opening. The grommet 1, in particular the elastic member 11, provides a sealed passage for the cable through the surface opening of the surface.

The grommet 1 may be selected such that the perimeter of the defined opening is at most half of the perimeter of the cross-section of the cable 81. This feature provides a good sealing between the grommet 1 and the cable 81. As an example, the grommet may be adapted such that its defined opening is suitable for a network cable having a circular cross-section with a perimeter of the diameter of the circular cross-section times pi, which equals the perimeter of the cross-section. Thus, if the perimeter of the cable cross-section is 18 mm, the grommet is preferably adapted such that the defined opening has a perimeter of at most 9 mm.

In summary, in one embodiment the present invention provides a grommet 1 which may be attached in a surface opening of e.g. a housing. The grommet 1 is sealed in two states: a first state in which no passage through the grommet 1 is provided, and a second state in which a sealed passage through the grommet 1 is provided. The grommet 1 is converted from its first state to its second state by releasing the pulling element 12 from the elastic member 11 of the grommet 1. The releasing of the pulling element 12 forms a defined opening thanks to a controlled releasing achieved by the form of the weakening 13. The elastic member 11 may, due to the opening being defined, be stretched to a great extent when compared to if the releasing would be made in an non-controlled manner. A connector 83, which is much larger than the defined opening, may thus be pushed through the opening, by stretching the elastic member 11, and without tearing the elastic member 11. The installation of e.g. wires for a wired device in a housing may thus be simplified. Further, the sealing of the cable 81 when provided through the grommet 1 is simple by that there is no need for any further components such as shrinkable tubing or sealants.

The person skilled in the art realizes that the present invention by no means is limited to the preferred embodiments described above. On the contrary, many modifications and variations are possible within the scope of the appended claims. For example, the grommet may be of different size and shape in different embodiments. In the above disclosed embodiments, the grommet, and in particular its defined opening, is adapted for a normal-sized network cable. In other embodiments, the grommet may be smaller or bigger to fit other sizes or shaped of objects. Moreover, the shape of the frame may be adapted in size and/or shape to fit the surface opening.

## Claims

1. A grommet for providing a sealed passage for an elongated object through a surface opening in a surface, said grommet comprising:
a frame (10) for attachment of said grommet in said surface opening;
an elastic member (11) enclosed by said frame (10); and
a pulling element (12) connected to said elastic member (11) via a weakening (13);
said pulling element (12) being releasably connected to said elastic member (11) along said weakening (13) for provision of a defined opening (70) in said elastic member (11) when said pulling element (12) is in a released state, said defined opening (70) providing said sealed passage;
wherein said pulling element (12) is releasable from said elastic member (11) by pulling.

2. The grommet according to claim 1, wherein said grommet is arranged to form a sealing of said surface opening in a non-released state of said pulling element (12).

3. The grommet according to claim 1 or 2, wherein the weakening (13) has a circular extension.

4. The grommet according to any of claims 1-3, wherein said weakening (13) is formed by a reduction in thickness.

5. The grommet according to any of claims 1-4, wherein said weakening (13) is formed by a distinct notch arrangement (50).

6. The grommet according to any of claims 1-5, wherein said elastic member (11) is funnel-shaped.

7. The grommet according to any of claims 1-6, wherein said elastic member (11) comprises a highly elastic material, such as silicone rubber, having an elasticity of at least 100 %.

8. The grommet according to any of claims 1-7, wherein said frame (10) comprises an elastomeric material.

9. The grommet according to any of claims 1-8, wherein said frame (10) comprises a circumferentially extending groove arrangement (20) for said attachment in said surface opening.

10. The grommet according to any of claims 1-9, wherein said defined opening (70) is centrally arranged in said elastic member (11).

11. The grommet according to any of claims 1-10, wherein said pulling element (12) and said elastic member (11) are integrally formed.

12. The grommet according to claim 1-10, wherein said frame (10), said pulling element (12) and said elastic member (11) are integrally formed.

13. A wired device comprising:
a housing comprising a surface (60) provided with a surface opening;
a grommet (1) according to any of claims 1-12, said grommet (1) being attached in said surface opening (60) and said pulling element (12) being released from said elastic member (11) along said weakening (13) by pulling for the provision of said defined opening (70); and
a cable (81) entering said housing though said defined opening (70) of the elastic member (11) of the grommet (1).

14. A method for providing a cable arrangement in a housing, said cable arrangement comprising a cable and a connector, such as a power plug or a network plug, connected to said cable, said method comprising:
providing (1001) a housing provided with a surface opening in a surface;
attaching (1002) a grommet according to any of claims 1-13 in said surface opening;
pulling (1003) the pulling element, thereby releasing the pulling element from the elastic member of said grommet, such that the defined opening in the elastic member is formed;
inserting (1004) an end of said cable arrangement, said end comprising said connector, through said defined opening;
wherein the elasticity of the elastic member permits passing, by elastic deformation of said elastic member, of the connector through said defined opening.

15. The method according to claim 14, further comprising selecting a grommet for which the perimeter P1 of the defined opening is at most half of the perimeter P2 of a cross-section of said cable.
